# EUROPEAN PATENT SPECIFICATION

(11) **EP 1 564 231 B1**
(45) Date of publication and mention of the grant of the patent: **24.12.2008**
(21) Application number: 05100390.3
(22) Date of filing: 21.01.2005
(51) Int. Cl.: C08F 255/02, C08F 8/46

(54) **Process for the production of a polyolefin modified with a polar monomer**
Verfahren zur Herstellung eines Polyolefins modifiziert mit polarem Monomer
Procédé de production d'une polyolefine modifiée par un monomère polaire

(30) Priority: 13.02.2004 IT MI20040237
(43) Date of publication of application: 17.08.2005
(73) Proprietor: Industrie Polieco - M.P.B. Srl, 25046 Cazzago San Martino (IT)
(72) Inventor: Vaccaro, Franco, 25040, Corte Franca (BS) (IT); Ausonio, Marina, 25089, Villanuova sul Clisi (BS) (IT); Pellegrini, Paolo, 25038, Rovato (BS) (IT)
(74) Representative: Jönsson, Hans-Peter

(56) References cited:
- EP-A- 0 501 762
- EP-A- 0 572 028
- US-B1- 6 451 919

## Description

The present invention relates to the process of the grafting of monomers onto polyolefins in the presence of organic peroxides, whereby the monomer(s) and organic peroxide have been absorbed into a carrier polymer that, under the grafting conditions, undergoes chain scission in preference to cross-linking in the presence of organic peroxides. The described grafting process allows to obtain an impact-modified graft-polyolefins useful as adhesives to polar polymers, metals, epoxy resins, cellulosic substrates and other polyolefins. Moreover, the described grafting process allows to obtain impact-modified, grafted polyolefin compounds with improved extrudability, heat stability and reduced gels or imperfections.

### BACKGROUND ART

Ethylene and propylene polyolefins are well known and are the result of polymerising C2-C3 alpha-olefin hydrocarbons alone or with other olefinic comonomers. The choice of olefin monomers, their relative proportions and the nature of the polymerisation process allow the manufacture of a vast number of polyolefins having varied crystallinity, molecular weights, molecular weight distributions, melting points and other material properties. These polymers are relatively chemically unreactive and non-polar - a desired property for many applications - but increased polarity and/or reactivity is a desirable attribute for applications such as adhesion to polar materials, compatibility with fillers and additives, microwave heating, cross linking or subsequent chemical reactions.

Polyolefins may be modified by grafting polar monomers onto the polyolefin. In the book 'Reactive Modifiers for Polymers' edited by S. Al-Malaika, 1997, published by Blackie Academic & Professional, London UK a great many grafting methods and polar monomers are reviewed. Grafting may be accomplished in the solid phase, in solution or in the melt phase. Melt grafting by reactive extrusion is of particular commercial importance and a review is given in the book 'Reactive Extrusion' edited by M. Xanthos, 1992, published by Carl Hanser Verlag, Munich. Processes involving melt grafting of unsaturated carboxylic acid derivatives to polyolefins are described, for example, in U.S. Pat. No. 3,177,269, U.S. Pat. No. 4,612,155, U.S. Pat. No. 4,987,190, U.S. Pat. No. 5,021,510, U.S. Pat. No. 6,331,595, U.S. Pat. No. 6,087,001(EP 0816460) and U.S. Pat. No. 6475633 (EP 0802207).

U.S. Pat. No. 4,612,155 describes a grafting process in which polyolefin in particulate form is fed to an extruder together with grafting agent and organic peroxide, the latter being in the form of a composition with a second thermoplastic polymer of lower melt viscosity. The resulting grafted polymer blends had, unsurprisingly, better flow properties (less crosslinking) than would have shown the products in the absence of the second thermoplastic polymer.

US Patent 4,987,190 discloses the concept of grafting a high density polyethylene with maleic anhydride by means of a peroxide in the presence of 5-25% polypropylene so as to control the final viscosity of the grafted blend. On grafting, the increased viscosity of the chain extended, grafted HDPE was offset by the reduced viscosity of the chain-scissioned, grafted polypropylene.

U.S. Pat. No. 6,331,595 teaches a process for grafting maleic anhydride onto a crosslinkable polyolefin in the presence of a peroxide by using a chain-scissionable carrier polymer for the monomer and peroxide. The resulting grafted blend showed reduced black specs and gels.

EP 0572028 A1 discloses concentrates suitable for the preparation pf polyolefines and a process using said concentrates.

U.S. Pat. No. 6,087,001 (EP 0816460) discloses an adhesive compound that has better film properties and adhesion to polar substrates by grafting maleic anhydride to a mixture of an ethylene copolymer and an elastomer of EPR type or styrene block copolymer type in the presence of a peroxide. This adhesive compound is claimed as an improved compound over those disclosed in EP-0035392 which comprise a blend of a grafted ethylene copolymer with an unmodified ethylene - alpha olefin copolymer.

U.S. Pat. No. 6,475,633 (EP 0802207) discloses a mixture, which is useful as a coextrusion binder, of at least (A) one polyethylene or one ethylene copolymer and of at least (B) chosen from (B1) propylene or a propylene copolymer, (B2) poly(1-butene) homo- or copolymer and (B3) polystyrene homo- or copolymer, the mixture of (A) and (B) being grafted with a 1.2-10 wt.% functional monomer, this grafted mixture itself optionally being diluted in at least one polyolefin (C) or in at least one polymer of elastomeric nature (D) or in a mixture of (C) and (D).

A method for the production of a grafted polyolefin with the melting of the components in a single step, during which the grafting of the polar monomer takes place, has now been found. The resultant grafted polyolefin has an improved impact resistance and an improved heat stability and is useful as an adhesive to polar polymers, metals, epoxy resins, cellulosic substrates and other polyolefins.

Accordingly the present invention provides an impact-modified, grafted polyolefin compound with improved and controllable extrudability, adhesion, thermal stability and reduced gels or imperfections. The applicant has found that such compounds are particularly suited to the manufacture of three-layer coated metal pipes. Such coated metal pipes comprise a steel pipe onto which is coated a first layer of epoxy resin, a second layer of the inventive compound and an outer layer of a polyethylene or polypropylene compound. Requirements and test methods for such pipe coatings can be found in German Specification DIN 36070 and other national specifications.

### DESCRIPTION OF THE COMPOUND

A thermoplastic composition comprising:
50-90 wt.% of a partially crystalline ethylene polymer or copolymer (A) of density 890-940 kg.m⁻³ and melt flow rate (according to ISO 1133, condition 190°C/2.16 kg) preferably between 0.5 - 10 dg.min⁻¹;
0-40 wt.% of a partially crystalline ethylene polymer or copolymer (A1) of density 890-940 kg.m⁻³ and melt flow rate (according to ISO 1133, condition 190°C/2.16 kg) preferably between 1.5 - 30 dg.min⁻¹, in any case greater than the melt flow rate of polymer A;
5-20 wt.% of a polyolefinic impact modifier (B);
1-20 wt.% of a propylene polymer or copolymer (C) of C3 content greater than 80 wt.% and into which has been incorporated 0.2-4 wt.% organic peroxide and 1-20 wt.% of an unsaturated acid or acid derivative such as ester, anhydride or imide;
and 0.01 to 3 wt.% of antioxidants with respect to the total weight of polymers (A), (A1), (B) and (C);
is mixed in an extruder, kneader or batch mixer, heated above the melting points of the components so as to melt blend the constituents and initiate decomposition of the peroxide and grafting of the monomer to the polymeric constituents. A 0.1-50 wt.% additives comprising antioxidants, UV stabilisers, fillers, pigments or process aids can be added to the grafted mixture downstream in the extruder, kneader or in the batch mixer so as to terminate the peroxide decomposition and grafting and permit a good distributive and dispersive mixing of the materials. Polymers (A1) and/or (B) can be introduced in the melted mixture through a second feeding point in the continuous extruders or once elapsed a certain time in the batch mixers, to maximize the grafting yield of the polar monomer. The blend is optionally subjected to vacuum devolatilisation before being thermoformed by means of a die into the inventive impact modified, grafted, stabilised product of desired shape and rheology.

Polymers (A) and (A1) are polyethylene or a copolymer of ethylene with one or more comonomers chosen from:
- alpha-olefins, advantageously those having from 3 to 12 carbon atoms.
   Examples of alpha-olefin comonomers having 3 to 12 carbon atoms comprise propene, 1-butene, 1-pentene, 1-hexene, 1,4-hexadiene, 4-methyl-1-pentene, 3-methyl-1-pentene, 1-octene, 1,7-octadiene, vinylbenzene, 1-decene, 1,9-decadiene and 1-dodecene. The alpha-olefins can be used alone or as a mixture of two or more than two.
- Vinyl esters of saturated carboxylic acids, such as, for example, vinyl acetate or vinyl propionate.
- Unsaturated carboxylic acid esters, such as, for example, alkyl (meth)acrylates in which the alkyl has from 1 to 8 carbon atoms.
   Examples of alkyl acrylate or methacrylate which can be used are in particular methyl acrylate, methyl methacrylate, ethyl acrylate, n-butyl acrylate, isobutyl acrylate or 2-ethylhexyl acrylate.
- Vinyl silanes, such as, for example, vinyl trimethoxysilane, vinyl triethoxysilane, allyl trimethoxysilane or vinyl methyl dimethoxysilane.

The density of polymer (A) is advantageously between 890 and 940 kg.m-3. The melt flow rate according to ISO 1133 at 190°C and 2.16 kg is preferably between 0.5 and 10 dg.min⁻¹.

The density of polymer (A1) is advantageously between 890 and 940 kg.m⁻³. The melt flow rate according to ISO 1133 at 190°C and 2.16 kg is preferably between 1.5 and 30 dg.min⁻¹.

Preferably, (A) and (A1) are LLDPE (linear low density polyethylene with a density of 915-935 kg.m⁻³) or VLDPE (very low density polyethylene with a density of 890-915 kg.m⁻³).

Polymer (B) is an ethylene-propylene copolymer, ethylene/propylene/diene, ethylene/propene/1-butene, ethylene/1-butene, ethylene/1-butene/diene, ethylene/propene/1-butene/diene or ethylene/4-methyl-I-pentene copolymer and mixtures of these copolymers, with the proviso that the ethylene content is between 45 and 85 wt.% and the crystallinity is less than 15% at 23°C.

Polymer (B) can also be a copolymer and/or a terpolymer containing styrene/butadiene/styrene (SBS) blocks, styrene/ethylene-butene/styrene (SEBS) blocks or styrene/isoprene/styrene (SIS) blocks or their hydrogenated or partially hydrogenated equivalents.

The density of polymer (B) is advantageously between 830 and 950 kg.m⁻³.

Preferably, Polymer (B) is an elastomer. Ethylene/propene copolymer rubbers and ethylene/1-butene copolymer rubber and styrene/butadiene/styrene and styrene/isoprene/styrene block copolymers are most preferred.

Polymer (C) is a polypropylene or a copolymer of propylene with one or more comonomers chosen from: ethylene, 1-butene, 1-hexene, 4-methylpent-1-ene, 1,4-hexadiene, dicyclopentadiene, ethylidenenorbornene and vinylnorbornene with the proviso that the propylene content of polymer (C) is greater than 80 wt.%.

The physical form of polymer (C) can be solid or alveolar powder, fluff, pellets, flakes or granules.

The mixture of Polymer (A), Polymer (A1), Polymer (B) and Polymer (C) is grafted with an unsaturated carboxylic acid or a functional derivative of this acid.

Examples of unsaturated carboxylic acids are those having 2 to 20 carbon atoms, such as acrylic, methacrylic, maleic, fumaric and itaconic acids. The functional derivatives of these unsaturated acids comprise, for example, the anhydrides, the ester derivatives, the amide derivatives and the imide derivatives.

Unsaturated dicarboxylic acids having 4 to 10 carbon atoms and their functional derivatives, particularly their anhydrides, are particularly preferred grafting monomers.

These grafting monomers comprise, for example, maleic, fumaric, itaconic, citraconic, allylsuccinic, cyclohex-4-ene-1,2-dicarboxylic, 4-methylcyclohex-4-ene-1,2-dicarboxylic, bicyclo[2.2.1]hept-5-ene-2,3-dicarboxylic and methylbicyclo[2.2.1]hept-5-ene-2,3-dicarboxylic acids or maleic, itaconic, citraconic, allylsuccinic, cyclohex-4-ene-1,2-dicarboxylic, 4-methylcyclohex-4-ene-1,2-dicarboxylic, bicyclo[2.2.1]-hept-5-ene-2,3-dicarboxylic and methylbicyclo[2.2.1]hept-5-ene-2,3-dicarboxylic anhydrides.

Examples of other grafting monomers comprise C₁ -C₈ alkyl esters or glycidyl ester derivatives of unsaturated carboxylic acids, such as methyl acrylate, methyl methacrylate, ethyl acrylate, ethyl methacrylate, butyl acrylate, butyl methacrylate, glycidyl acrylate, glycidyl methacrylate, monoethyl maleate, diethyl maleate, monomethyl fumarate, dimethyl fumarate, monomethyl itaconate and diethyl itaconate; amide derivatives of unsaturated carboxylic acids, such as acrylamide, methacrylamide, maleic acid monoamide, maleic acid diamide, maleic acid N-monoethylamide, maleic acid N,N-diethylamide, maleic acid N-monobutylaminde, maleic acid N,N-dibutylamide, fumaric acid monoamide, fumaric acid diamide, fumaric acid N-monoethylamide, fumaric acid N,N-diethylamide, fumaric acid N-monobutylamide and fumaric acid N, N-dibutylamide; imide derivatives of unsaturated carboxylic acids, such as maleimide, N-butylmaleimide and N-phenylmaleimide.

Maleic anhydride is preferred.

Examples of organic peroxides which can be used comprise t-butyl hydroperoxide, cumene hydroperoxide, diisopropylbenzene hydroperoxide, 1,1-di(t-butyl peroxy)-3,5,5-trimethyl cyclohexane, di-t-butyl peroxide, t-butyl cumyl peroxide, dicumyl peroxide, 1,3-bis(t-butylperoxyisopropyl)benzene, 1,4-bis(t-butylperoxyisopropyl)benzene, 2,5-bis(t-butylperoxy)-2,5-dimethylhexane, 2,5-bis(t-butylperoxy)-2,5-dimethylhexyne and their mixtures.

Di-t-butyl peroxide and 2,5-bis(t-butylperoxy)-2,5-dimethylhexane are preferred.

Optionally, scorch retardants can also be used in conjunction with the organic peroxides and comprise 2,4-Diphenyl-4-methyl-1-pentene, trivinylcyclohexane, substituted or unsubstituted 1,1-diphenylethylene, 2-allylphenol; 2-allyl phenyl allyl ether; 4-isopropenyl-2,6-dimethylphenyl allyl ether; 2,6-dimethyl-4-allylphenol; 2,6-dimethylphenyl allyl ether; 2,6-dimethyl-4-allylphenyl allyl ether; 2-methoxy-4-allylphenol; 2-methoxy-4-allylphenyl allyl ether; 2,2'-diallyl bisphenol A; O,O'-diallyl bisphenol A; tetramethyl diallylbisphenol A, stable nitroxide radicals which include the group =N-O, such as 2,2,5,5-tetramethyl-1-pyrrolidinyloxy (PROXYL) and 2,2,6,6-tetramethyl-1-piperidinyloxy, generally marketed under the name TEMPO.

In the production process various additives, such as antioxidants, UV stabilisers, fillers, process aids, slip agents, lubricants, pigments, dyes, nucleating agents, and flame retardants may be added. Such additives may be in pure form or may have been previously dry-mixed with a polymer in powder form or previously incorporated onto a polyolefin.

Such additives may be chosen between those reported below.

Examples of antioxidants are 2,6-di-t-butyl-p-cresol, tetrakis-[methylene-3-(3,5-di-t-butyl-4-hydroxyphenyl)propionate]methane, 4,4'-thio-bis(2-t-butyl-5-methylphenol), poly(2,2,4-trimethyl-1,2-dihydroquinoline), 2,2'-oxalyldiamido-bis ethyl-3-(3,5-di-tert-butyl-4-hydroxyphenyl)-propionate, 1,2-bis(3,5-di-tert-butyl-4-hydroxyhydrocinnamoyl)-hydrazine, p-naphthylamine and para-phenylenediamine, bis(2,4-di-t-butylphenyl)pentaerythritol-diphosphite and tris(p-nonylphenyl)-phosphite, tetrakis[methylene(3,5-di-tert-butyl-hydroxyhydrocinnamate)]methane, tris(2,4-di-tert-butyl-phenyl)phosphite, distearyl-3,3'-thiodipropionate.

Examples of UV stabilisers are 2,4-dihydroxybenzophenone, 2-(2'-hydroxy-3', 5'-di-t-butylphenyl)-5-chlorobenzotriazole, 2-(2-hydroxy-3-t-butyl-5-methylphenyl)-5-chlorobenzotriazole and hindered amines.

Examples of fillers are calcium carbonate, titanium dioxide, talc, clay, silica, barium sulphate, magnesium hydroxide, glass fibres and carbon fibres.

Examples of process aids, slip agents and lubricants are stearamide, oleamide, erucamide, polysiloxanes, fluorinated polymers or elastomers, polyglycol ethers, calcium stearate, zinc stearate, magnesium stearate, long chain fatty amides and polyolefin wax.

Examples of dyes and pigments are carbon black and titanium.

Examples of nucleating agents are dibenzylidenesorbitol, aluminium para-t-butylbenzoate, and aluminium hydroxy-di-para-t-butylbenzoate.

Examples of flame- retardants are antimony oxide, red phosphorus, ammonium polyphosphate, melamine, decabromobiphenyl ether and the like.

The amounts of these additives are selected so as not to unduly modify the adhesive characteristics of the inventive compound.

Advantageously, the appropriate amounts with respect to the total weight of Polymers (A), (A1), (B) e (C) approximately 0 to approximately 3 wt.% for the UV stabilisers; approximately 0 to approximately 30 wt.% for the fillers; approximately 0 to approximately 5 wt. % for the dyes and pigments; approximately 0 to approximately 1wt.% for the nucleating agents; approximately 0 to approximately 1 wt.% for the process aids, slip agents and lubricants; and approximately 0 to approximately 50 wt.% for the flame retardants.

### EXAMPLES

### Example 1

A single screw extruder equipped with one loss-in-weight feeding hopper and with a degassing unit was used to manufacture the inventive compounds.
The set temperature profile was: 180°C, 200°C, 210°C, 230°C, 230°C. The screw speed was 90 rpm.

7.25 kg/h of polymer (A), a pelletised ethylene-butene copolymer (MFR 2.8 dg.min⁻¹, density 919 kg.m⁻³) with 1.0 kg/h of polymer (A1), a pelletised ethylene-butene copolymer (MFR 5.8 dg.min-1, density 918 kg.m-3), 1.5 kg/h of polymer (B), a pelletised ethylene-propylene copolymer (C2:C3 ratio equal to 72:28 wt.%) and 0.25 kg/h of polymer (C), a porous polypropylene homopolymer containing 1.0 wt.% di-t-butylperoxide and 15 wt.% maleic anhydride, 0.6 wt.% thioester antioxidant, 0.2 wt.% phenolic antioxidant and 0.2 wt.% phosphite antioxidant were fed into the extruder.

The resulting MFR of the colourless compound was 1.8 dg.min⁻¹. Adhesion of the compound to aluminium foil was satisfactory. The Vicat softening temperature determined on a compression moulded sheet prepared with the so far obtained compound was 85°C. The adhesion test, performed simulating the three-layer steel pipe coating, gave a result of 25 N/mm.

### Example 2

A single screw extruder equipped with one loss-in-weight feeding hopper and with a degassing unit was used to manufacture the inventive compounds. The set temperature profile was: 180°C, 200°C, 210°C, 230°C, 230°C. The screw speed was 90 rpm.

7.75 kg/h of polymer (A), a pelletised ethylene-butene copolymer (MFR 2.8 dg.min⁻¹, density 919 kg.m⁻³) with 1.0 kg/h of polymer (A1), a pelletised ethylene-butene copolymer (MFR 5.8 dg.min-1, density 918 kg.m-3), 1.0 kg/h of polymer (B), a pelletised ethylene-propylene copolymer (C2:C3 ratio equal to 72:28 wt.%) and 0.25 kg/h of polymer (C), a porous polypropylene homopolymer containing 1.0 wt.% di-t-butylperoxide and 15 wt.% maleic anhydride, 0.6 wt.% thioester antioxidant, 0.2 wt.% phenolic antioxidant and 0.2 wt.% phosphite antioxidant were fed into the extruder.

The resulting MFR of the colourless compound was 2.0 dg.min⁻¹. Adhesion of the compound to aluminium foil was satisfactory. The Vicat softening temperature determined on a compression moulded sheet prepared with the so far obtained compound was 88°C. The adhesion test, performed simulating the three-layer steel pipe coating, gave a result of 18 N/mm.

### Example 3

A BUSS^{™} kneader equipped with two loss-in-weight feeding hoppers at zone 1 and 3, a degassing unit in zone 5 and a melt pump feeding a die plate and pelletiser was used for manufacture of the inventive compounds. The set temperature profile was: 160°C, 180°C, 200°C, 210°C, 210°C. The screw speed was 380 rpm.

6.65 kg/min of polymer (A), a pelletised ethylene-butene copolymer (MFR 2.8 dg.min⁻¹, density 919 kg.m⁻³), 0.25 kg/h of polymer (C), a porous polypropylene homopolymer containing 1.0 wt.% di-t-butylperoxide and 15 wt.% maleic anhydride were fed into the kneader through hopper 1.

3.0 kg/min of polymer (A1), a pelletised ethylene-butene copolymer (MFR 5.8 dg.min-1, density 918 kg.m-3), 0.6 wt.% thioester antioxidant, 0.2 wt.% phenolic antioxidant and 0.2 wt.% phosphite antioxidant were fed into kneader through hopper 2.

A vacuum was applied at the vacuum port and the blended compound was palletised.

The resulting MFR of the colourless compound was 2.1 dg.min⁻¹ and the amount of grafted maleic anhydride, determined by acidimetric titration, was 0.19%. Adhesion of the compound to aluminium foil was 1.5 N/mm.

### Example 4

The BUSS^{™} kneader described in Example 3 was used for manufacture of the inventive compounds. The set temperature profile was: 160°C, 180°C, 190°C, 200°C, 210°C, 210°C. The screw speed was 380 rpm.

5.65 kg/min of polymer (A), a pelletised ethylene-butene copolymer (MFR 2.8 dg.min⁻¹, density 919 kg.m⁻³), 1.0 kg/h of polymer (B), a pelletised ethylene-propylene copolymer (C2:C3 ratio equal to 72:28 wt.%) 0.25 kg/h of polymer (C), a porous polypropylene homopolymer containing 1.0 wt.% di-t-butylperoxide and 15 wt.% maleic anhydride were fed into the kneader through hopper 1.

3.0 kg/min of polymer (A1), a pelletised ethylene-butene copolymer (MFR 5.8 dg.min-1, density 918 kg.m-3), 0.6 wt.% thioester antioxidant, 0.2 wt.% phenolic antioxidant and 0.2 wt.% phosphite antioxidant were fed into kneader through hopper 2.

A vacuum was applied at the vacuum port and the blended compound was palletised.

The resulting MFR of the colourless compound was 1.8 dg.min⁻¹ and the amount of grafted maleic anhydride, determined by acidimetric titration, was 0.21%. Adhesion of the compound to aluminium foil was 4.0 N/mm.

The process described in Example 4 has to be considered as the process that gave the best result.

## Claims

1. A process of the grafting of polar monomers in the presence of organic peroxides onto a mixture of thermoplastic materials, with the melting of the components in a single step, during which a impact-modified, grafted polyolefin is obtained, that comprises:
50-90 wt.% of polymer (A): ethylene polymer or copolymer, with one or more copolymers
0-40 wt.% of polymer (A1): ethylene polymer or copoiymer (A1), with one or more copolymers, with a melt flow rate greater than the melt flow rate of polymer A;
5-20 wt.% of a polymer (B): an impact modifier copolymer
1-20 wt.% of product (C): propylene polymer or copolymer into which has been incorporated 0.2-4 wt.% organic peroxide and 1-20 wt.% of a polar monomer and
0.01 to 3 wt.% of antioxidants with respect to the total weight of Polymers (A), (A1), (B) and (C).

2. A process according to claim 1, wherein the polar monomer and the organic peroxide are supported onto porous polypropylene (polymer (C)).

3. A process according to claim 1 and 2 wherein the polar monomer is maleic anhydride.

4. A process according to claim 1 and 2 wherein the comonomer used to produce polymer (A) and polymer (A1) is chosen from α-olefins, those having from 3 to 12 carbon atoms.

5. A process according to claim 1. and 2. wherein polymer (B) is an elastomer chosen from: ethylene/propylene copolymer, ethylene/1-butene copolymer, styrene/butadiene copolymer and/or styrene/butadiene/styrene (SBS) terpolymer or styrene/isoprene copolymer or styrene/isoprene/styrene (SIS) terpolymer.

## Patentansprüche

1. Verfahren zum Pfropfen von polaren Monomeren in Gegenwart von organischen Peroxiden auf ein Gemisch von thermoplastischen Materialien unter Schmelzen der Komponenten in einem einzigen Schritt, wobei ein schlagzähgemachtes, gepfropftes Polyolefin erhalten wird, das Folgendes umfasst:
50 bis 90 Gew.-% Polymer (A): Ethylenpolymer oder -copolymer mit einem oder mehreren Copolymeren;
0 bis 40 Gew.-% Polymer (A1): Ethylenpolymer oder -copolymer (A1) mit einem oder mehreren Copolymeren mit einem Schmelzfließindex, der größer ist als der Schmelzfließindex von Polymer A;
5 bis 20 Gew.-% eines Polymers (B): eines schlagzähmachenden Copolymers;
1 bis 20 Gew.-% Produkt (C): Propylenpolymer oder -copolymer, in das 0,2 bis 4 Gew.-% organisches Peroxid und 1 bis 20 Gew.-% eines polaren Monomers eingebaut sind; und
0,01 bis 3 Gew.-% Antioxidantien, bezogen auf das Gesamtgewicht der Polymere (A), (A1), (B) und (C).

2. Verfahren gemäß Anspruch 1, wobei poröses Polypropylen (Polymer (C)) als Träger für das polare Monomer und das organische Peroxid dient.

3. Verfahren gemäß Anspruch 1 und 2, wobei es sich bei dem polaren Monomer um Maleinsäureanhydrid handelt.

4. Verfahren gemäß Anspruch 1 und 2, wobei das zur Herstellung von Polymer (A) und Polymer (A1) verwendete Comonomer aus α-Olefinen mit 3 bis 12 Kohlenstoffatomen ausgewählt ist.

5. Verfahren gemäß Anspruch 1 und 2, wobei Polymer (B) ein Elastomer ist, das aus Ethylen/Propylen-Copolymer, Ethylen/1-Buten-Copolymer, Styrol/Butadien-Copolymer und/oder Styrol/Butadien/Styrol(SBS)-Terpolymer oder Styrol/Isopren-Copolymer oder Styrol/Isopren/Styrol(SIS)-Terpolymer ausgewählt ist.

## Revendications

1. Procédé pour greffer des monomères polaires en présence de peroxydes organiques sur un mélange de matériaux thermoplastiques, les composants fondant dans une seule étape, pour obtenir une polyoléfine greffée à résistance aux chocs modifiée comprenant:
de 50 à 90% en poids de polymère (A): d'un polymère ou d'un copolymère d'éthylène avec un ou plusieurs copolymères;
de 0 à 40% en poids de polymère (A1): d'un polymère ou d'un copolymère d'éthylène (A1) avec un ou plusieurs copolymères ayant un indice de fluidité qui est plus grand que l'indice de fluidité du polymère A;
de 5 à 20% en poids d'un polymère (B): d'un copolymère modifiant la résistance aux chocs;
de 1 à 20% en poids d'un produit (C): d'un polymère ou d'un copolymère de propylène dans lequel de 0,2 à 4% en poids de peroxyde organique et de 1 à 20% en poids d'un monomère polaire ont été incorporés; et
de 0,01 à 3% en poids d'antioxydants, basés sur le poids total des polymères (A), (A1), (B) et (C).

2. Procédé selon la revendication 1, dans lequel le monomère polaire et le peroxyde organique sont supportés sur du polypropylène poreux (polymère (C)).

3. Procédé selon la revendication 1 et 2, dans lequel le monomère polaire est l'anhydride maléique.

4. Procédé selon la revendication 1 et 2, dans lequel le comonomère utilisé pour produire le polymère (A) et le polymère (A1) est choisi parmi les α-oléfines ayant de 3 à 12 atomes de carbone.

5. Procédé selon la revendication 1 et 2, dans lequel le polymère (B) est un élastomère choisi parmi un copolymère d'éthylène et de propylène, un copolymère d'éthylène et de 1-butène, un copolymère de styrène et de butadiène et/ou un terpolymère de styrène/butadiène/styrène (SBS) ou un copolymère de styrène et d'isoprène ou un terpolymère de styrène/isoprène/styrène (SIS).
